# EUROPÄISCHE PATENTSCHRIFT

(11) **EP 0 744 788 B1**
(45) Veröffentlichungstag und Bekanntmachung des Hinweises auf die Patenterteilung: **21.07.1999**
(21) Anmeldenummer: 96107510.8
(22) Anmeldetag: 10.05.1996
(51) Int. Cl.: H01R 4/64

(54) **Vorrichtung zum elektrisch leitenden Kontaktieren eines metallischen Rohres**
Device for electrically contacting a metallic pipe
Dispositif pour contacter électriquement un tube métallique

(30) Priorität: 20.05.1995 DE 19518562; 01.08.1995 DE 19528140
(43) Veröffentlichungstag der Anmeldung: 27.11.1996
(73) Patentinhaber: ALCATEL, 75008 Paris (FR)
(72) Erfinder: Cauderay, François, 30853 Langenhagen (DE); Horn, Thomas, 30165 Hannover (DE); Schiefer, Hans-Jürgen, 30167 Hannover (DE)
(74) Vertreter: Döring, Roger, Dipl.-Ing.

(56) Entgegenhaltungen:
- WO-A-88/03334
- GB-A- 584 845
- US-A- 2 432 492
- US-A- 4 465 330

## Beschreibung

Die Erfindung bezieht sich auf eine Vorrichtung zum elektrisch leitenden Kontaktieren eines an seiner Oberfläche blanken metallischen Rohres, bestehend aus einer bandförmigen metallischen Schelle, die an ihren beiden in Montageposition zusammengeführten Enden mit Teilen einer Verschlußeinrichtung ausgerüstet ist (siehe zum Beispiel die US-A-2 432 492).

Eine derartige Vorrichtung wird beispielsweise zum Anschluß eines metallischen Rohres an Erdpotential verwendet. Von besonderer Bedeutung ist eine wirksame Erdung bei elektrischen Kabeln mit einem metallischen Rohr im Mantelaufbau bzw. als elektrischer Leiter. Das metallische Rohr kann also auch der rohrförmige Außenleiter eines koaxialen Hochfrequenz (HF)-Kabels sein.

Zum Erdanschluß eines koaxialen HF-Kabels sind auf dem Markt Montagesets erhältlich, die aus mehreren Einzelteilen bestehen. Das sind ein Kupferrundseil, ein Kupfergeflechtband, eine Kupferschelle, eine Gummieinlage, Dichtmasse und eine Breitbandschelle. Diese in einem Paket befindlichen Einzelteile müssen zur Herstellung einer elektrisch leitenden Verbindung nacheinander um den Außenleiter des HF-Kabels herumgelegt werden. Die Montage ist daher aufwendig.

Der Erfindung liegt die Aufgabe zugrunde, die Handhabung der eingangs geschilderten Vorrichtung zu vereinfachen.

Diese Aufgabe wird gemäß der Erfindung dadurch gelöst,
- daß die Schelle unter Freilassung der zur Kontaktierung mit dem Rohr bestimmten Innenfläche in elastisches Isoliermaterial eingebettet ist und
- daß an der Schelle ein an ihrer Innenfläche anliegendes, bei Druckbelastung verformbares Zwischenstück aus elektrisch gut leitendem Material unverlierbar angebracht ist, das sich über eine wesentliche Länge der Schelle erstreckt.

Mit dieser Vorrichtung ist eine einstückige Schelle gegeben, die daher besonders einfach montiert werden kann. Sie ist in einer Vormontage so in elastisches Isoliermaterial eingebettet, daß nur die zur Kontaktierung mit dem Rohr benötigte Innenfläche frei bleibt. An dieser Innenfläche ist ein Zwischenstück aus elektrisch gut leitendem Material angebracht, das bei montierter Schelle an der blanken Oberfläche des Rohres anliegt. Da das Zwischenstück durch Druck verformbar ist, wird es bei montierter und damit verschlossener Schelle gegen das Rohr einerseits und die Innenfläche der Schelle andererseits gepreßt. Eine elektrisch gut leitende Verbindung mit niedrigem Übergangswiderstand zwischen Rohr und Schelle ist dadurch sichergestellt. Das wird auf einfache Weise durch Herumlegen der einstückigen Schelle um das Rohr und ausschließendes Verschließen der Schelle erreicht. Weitere Teile brauchen nicht montiert zu werden. Es muß nur die Oberfläche des Rohres vorher gegebenenfalls blank gemacht werden.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:

Fig. 1 einen Abschnitt eines Rohres mit einer daran angebrachten Vorrichtung nach der Erfindung.

Fig. 2 ein Schnittbild von Fig. 1.

Fig. 3 einen Schnitt durch Fig. 1 längs der Linie III - III.

Fig. 4 Teile der in der Vorrichtung eingesetzten Schelle in einer Seitenansicht.

Fig. 5 einen Schnitt durch Fig. 4 längs der Linie V - V.

Fig. 6 eine Seitenansicht der kompletten Schelle.

Fig. 7 einen Schnitt durch Fig. 6 längs der Linie VII - VII.

Fig. 8 eine Ansicht von Fig. 6 in Richtung des Pfeiles A.

Fig. 9 eine Einzelheit aus Fig. 7 in vergrößerter Darstellung.

Fig. 10 eine Einzelheit aus Fig. 6 in vergrößerter Darstellung.

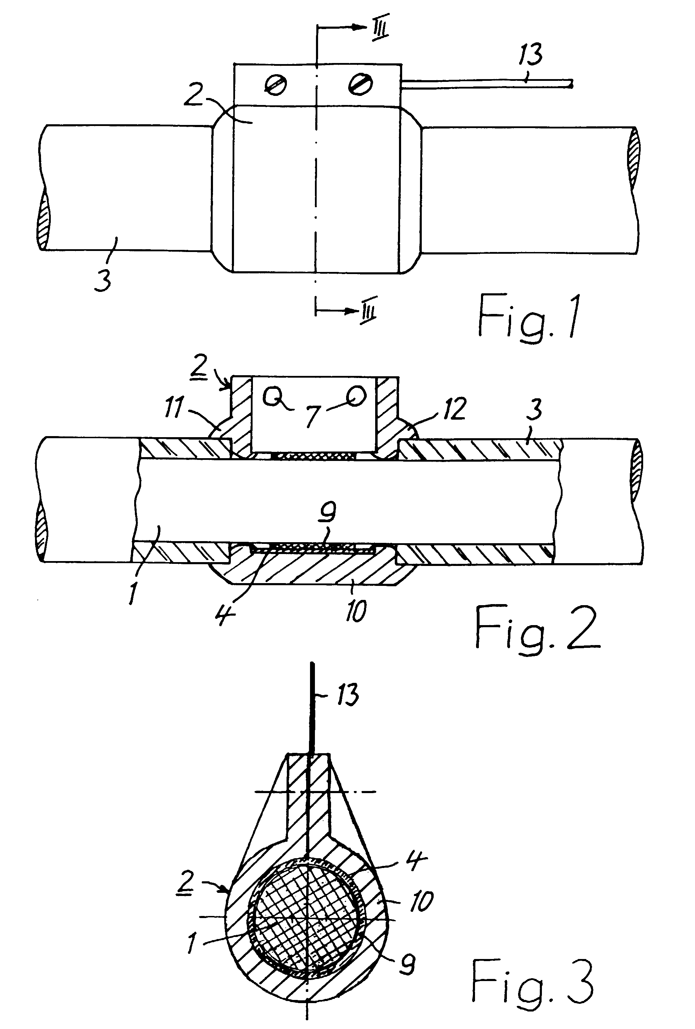

In den Fig. 1 und 2 ist ein Abschnitt eines metallischen Rohres 1 dargestellt, in dessen Verlauf eine Schelle 2 angeordnet ist, mittels derer das Rohr 1 an Masse angeschlossen bzw. geerdet werden kann. Das Rohr 1 kann ein Rohr zum Transport beliebiger Medien sein. Es kann auch Teil eines elektrischen Kabels sein. Das Rohr 1 ist vorzugsweise von einem aus Kunststoff bestehenden Mantel 3 umgeben.

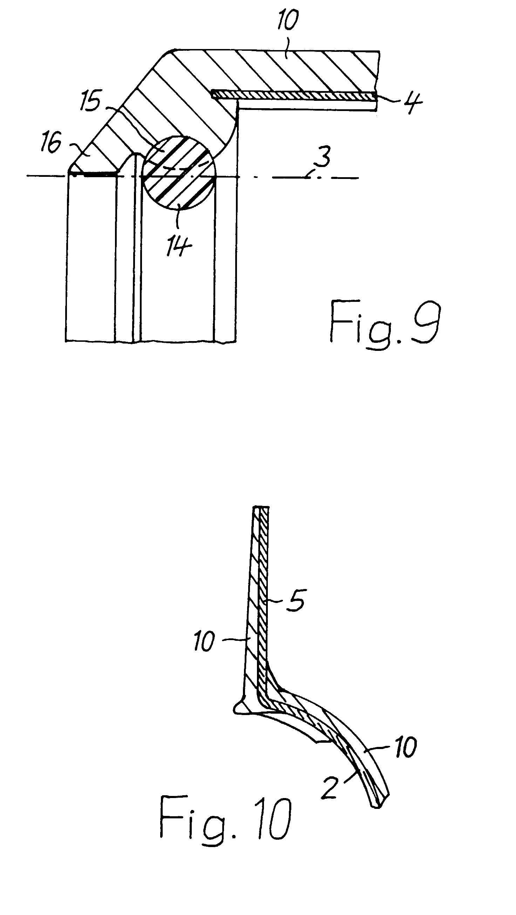

Die Schelle 2 besteht aus einem Metallband 4, das an seinen beiden Enden 5 und 6 zur Bildung einer Verschlußeinrichtung abgebogen ist. In den abgebogenen Enden 5 und 6 der Schelle 2 können Löcher 7 (Fig. 2 und 8) zur Aufnahme von Schrauben oder anderen Verschlußteilen angebracht sein. Sie können durch Sicken 8 gegenüber dem Metallband 4 selbst stabilisiert sein.

Das Metallband 4 besteht vorzugsweise aus Kupfer. Es können grundsätzlich aber auch ein anderes, elektrisch gut leitendes Metall und beispielsweise auch rostfreier Stahl eingesetzt werden.

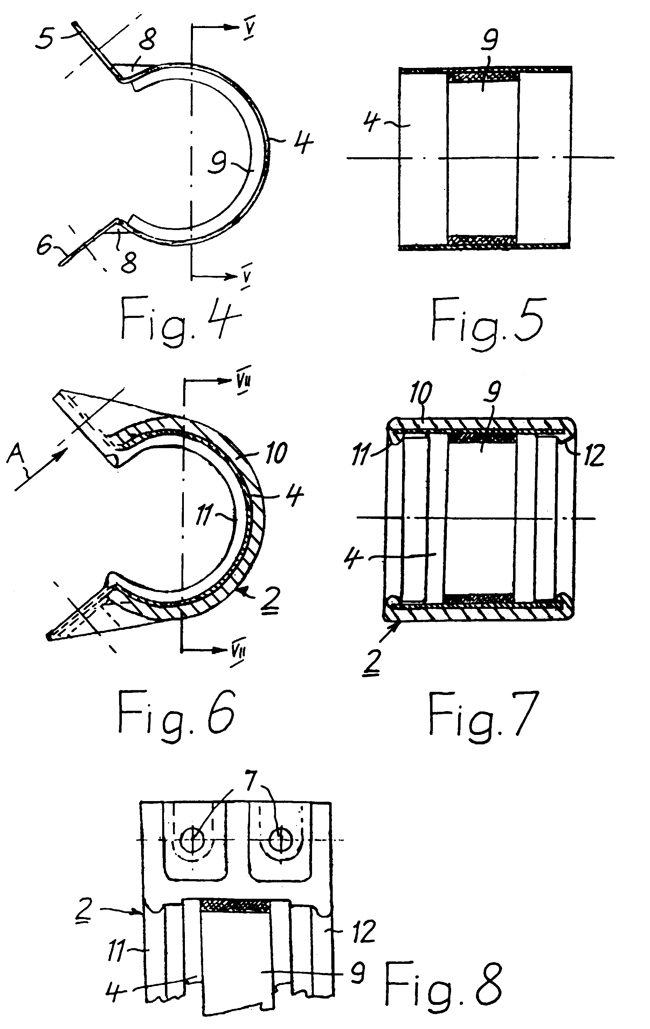

Das Metallband 4 der Schelle 2 kann gemäß Fig. 4 als Kreisbogen vorgebogen sein. Es trägt an seiner inneren Oberfläche ein bei Druckbelastung verformbares Zwischenstück 9 aus elektrisch gut leitendem Material. Das Zwischenstück 9 ist in bevorzugter Ausführungsform ein Band aus einem Kupfergeflecht. Es verläuft etwa über die Länge des gebogenen Teils des Metallbandes 4 und ist schmaler als dasselbe. Das Zwischenstück 9 wird gemäß Fig. 5 etwa mittig auf dem Metallband 4 angeordnet, so daß auf seinen beiden Seiten ein freier Streifen desselben frei bleibt. Das Zwischenstück 9 kann mit dem Metallband 4 punktförmig beispielsweise durch Schweißen oder durch einen Kleber verbunden sein. Durch die gebogene Ausführung des Metallbandes 4 bzw. der Schelle 2 insgesamt bleibt das Zwischenstück 9 im Normalfall aber auch ohne gesonderte Befestigung in seiner Position.

Das Metallband 4 ist in elastisches Isoliermaterial 10, beispielsweise Gummi, so eingebettet, daß nur wesentliche Teile seiner inneren Oberfläche und der umgebogenen Enden 5 und 6 mit den Löchern 7 freibleiben. An den Rändern des Isoliermaterials 10 sind Dichtlippen 11 und 12 angeformt, die bei montierter Schelle 2 auf dem Mantel 3 des Rohres 1 aufliegen. Zum Anschluß der Schelle 2 an Masse bzw. Erde kann beispielsweise ein Kupferband 13 verwendet werden.

Um sicherzustellen, daß die Schelle 2 auch dann völlig dicht am Mantel 3 des Rohres 1 anliegt, wenn dessen Oberfläche sehr rauh ist und beispielsweise in Achsrichtung verlaufende Riefen aufweist, kann an den Dichtlippen 11 und 12 zusätzlich Dichtungsmaterial 14 angebracht sein. Dazu können plastische, weichelastische und dauerelastische Dichtungsmaterialien verwendet werden. Das Dichtungsmaterial 14 muß so ausgebildet und angeordnet sein, daß es in alle Unregelmäßigkeiten des Mantels 3 eindringen kann. Zur Aufnahme desselben kann in den Dichtlippen 11 und 12 über deren ganze Länge jeweils eine in Fig. 9 gestrichelt abgegrenzte Vertiefung 15 angebracht sein, in welcher ein etwa kreisförmiger Strang des Dichtungsmaterials 14 angeordnet wird.

Falls das Dichtungsmaterial 14 nicht von sich heraus in der Vertiefung 15 haftet, kann ein Haftvermittler eingesetzt werden. Das Dichtungsmaterial 14 wird bei Montage der Schelle 2 so verformt, daß es fest an den in Fig. 9 strichpunktiert eingezeichneten Mantel 3 des Rohres 1 angepreßt wird und in eventuelle Riefen desselben eindringt. Die Erweiterung 16 der Dichtlippen 11 und 12 dient als Abweiskante für Regen oder andere Flüssigkeiten. Sie liegt bei montierter Schelle 2 umlaufend am Mantel 3 des Rohres 1 an.

Als zusätzliche Maßnahme zur Abdichtung des Schließbereiches der Schelle 2 kann das Isoliermaterial 10 an den abgebogenen Enden 5 und 6 derselben entsprechend Fig. 10 konisch ausgeführt sein. Die Wandstärke des Isoliermaterials 10 ist an den Übergängen zwischen der Schelle 2 und den abgebogenen Enden 5 und 6 größer als an den freien Stirnseiten derselben. Beim Verschließen der Schelle 2 werden die beiden Enden 5 und 6 gegeneinander gepreßt. Im verdickten Bereich wird dabei auf das Isoliermaterial 10 der größte Druck ausgeübt, so daß sich ein vollständig dichter Verschluß der Schelle 2 ergibt.

Bei der Montage der Schelle 2 wird beispielsweise wie folgt vorgegangen:

Der Mantel 3 des Rohres 1 wird auf einer der Breite der Schelle 2 entsprechenden Länge entfernt. Die dadurch freigelegte Oberfläche des Rohres 1 wird dann metallisch blank gemacht. Anschließend wird die Schelle 2 um das blanke Rohr 1 herumgelegt und durch Anziehen der Verschraubung verschlossen. Dadurch wird das Zwischenstück 9 gegen das Rohr 1 einerseits und das Metallband 4 andererseits gepreßt. Es ergibt sich eine elektrisch leitende Verbindung mit kleinem Übergangswiderstand zwischen Rohr 1 und Schelle 2. Durch das vor dem Verschließen der Schelle 2 an einer der durch die Löcher 7 geführten Verschraubungen angebrachte Kupferband 13 ist damit eine einwandfreie Erdung des Rohres 1 erreichbar. Die Dichtlippen 11 und 12 und gegebenenfalls das Dichtungsmaterial 14 werden außerdem auf den Mantel 3 gedrückt, so daß der Mantel 3 wieder hergestellt und der von der Schelle 2 umschlossene Raum feuchtigkeitsdicht verschlossen ist.

## Patentansprüche

1. Vorrichtung zum elektrisch leitenden Kontaktieren eines an seiner Oberfläche blanken metallischen Rohres (1), bestehend aus einer bandförmigen metallischen Schelle (2), die an ihren beiden in Montageposition zusammengeführten Enden mit Teilen einer Verschlußeinrichtung ausgerüstet ist, dadurch gekennzeichnet,
- daß die Schelle (2) unter Freilassung der zur Kontaktierung mit dem Rohr (1) bestimmten Innenfläche in elastisches Isoliermaterial (10) eingebettet ist und
- daß an der Schelle (2) ein an ihrer Innenfläche anliegendes, bei Druckbelastung verformbares Zwischenstück (9) aus elektrisch gut leitendem Material unverlierbar angebracht ist, das sich über eine wesentliche Länge der Schelle (2) erstreckt.

2. Vorrichtung nach Anspruch 1, dadurch gekennzeichnet, daß das Zwischenstück (9) ein Band aus einem Kupfergeflecht ist.

3. Vorrichtung nach Anspruch 2, dadurch gekennzeichnet, daß das Zwischenstück (9) punktförmig mit der Schelle (2) verbunden ist.

4. Vorrichtung nach einem der Ansprüche 1 bis 3, dadurch gekennzeichnet, daß die Schelle (2) einschließlich Isoliermaterial (10) und Zwischenstück (9) kreisbogenförmig gestaltet ist.

5. Vorrichtung nach einem der Ansprüche 1 bis 4, dadurch gekennzeichnet, daß das Isoliermaterial (10) an den beiden einander gegenüber liegenden Längskanten der Schelle (2) auf deren ganzer Länge über dieselbe hinausragende Dichtlippen (11,12) hat.

6. Vorrichtung nach Anspruch 5, dadurch gekennzeichnet, daß in den Dichtlippen (11,12) Vertiefungen (15) zur Aufnahme von zusätzlichem Dichtungsmaterial (14) angebracht sind.

7. Vorrichtung nach einem der Ansprüche 1 bis 6, dadurch gekennzeichnet, daß die Wandstärke des Isoliermaterials (10) im Verschlußbereich der Schelle (2) an der am weitesten innen liegenden Stelle größer als weiter außen ist.

8. Vorrichtung nach einem der Ansprüche 1 bis 7, dadurch gekennzeichnet, daß die Schelle (2) aus Kupfer besteht.

9. Vorrichtung nach einem der Ansprüche 1 bis 7, dadurch gekennzeichnet, daß die Schelle (2) aus rostfreiem Stahl besteht.

10. Vorrichtung nach einem der Ansprüche 1 bis 9, dadurch gekennzeichnet, daß als Isoliermaterial (10) Gummi eingesetzt ist.

## Claims

1. Device for the electrically conductive contacting of a pipe (1) which is bright finished on its surface, consisting of a band shaped metallic clamp (2) which is equipped with parts of a closing device at both ends which are brought together in the assembly position, characterised by
• the clamp (2) being embedded into elastic insulating material (10) leaving free the inner surface required for making contact with the pipe (1) and
• the clamp (2) having captively attached to it on its inner surface a separator (9) made from electrically very conductive material which can be deformed under pressure and which extends over a great length of the clamp (2).

2. Device according to claim 1, characterised by the separator (9) being a band made from copper braid.

3. Device according to claim 2, characterised by the separator (9) being spot connected to the clamp (2).

4. Device according to claims 1 to 3, characterised by the clamp (2), including the insulating material (10) and the separator (9), being formed into an arc shape.

5. Device according to claims 1 to 4, characterised by the insulating material (10) having sealing lips (11, 12) which protrude along the whole of the length along both long opposing edges of the clamp (2).

6. Device according to claim 5, characterised by recesses (15) being made in the sealing lips (11, 12) for holding additional sealing material (14).

7. Device according to one of claims 1 to 6, characterised by the wall strength of the insulating material (10) in the closing area of the clamp (2) being greater at the furthest inner position than the furthest outer position.

8. Device according to one of the claims 1 to 7, characterised by the clamp (2) being made from copper.

9. Device according to one of the claims 1 to 7, characterised by the clamp (2) being made from stainless steel.

10. Device according to one of the claims 1 to 9, characterised by rubber being used as insulating material (10).

## Revendications

1. Dispositif permettant d'établir le contact électrique sur un tube métallique (1) dénudé en surface, constitué d'un collier métallique (2) en forme de ruban pourvu en ses deux extrémités réunies en position de montage des éléments d'un système de fermeture, caractérisé par le fait
• que le collier (2) est enrobé d'une matière isolante élastique (10) tout en laissant libre la surface intérieure destinée à l'établissement du contact avec le tube (1) et
• qu'une pièce intercalaire (9) en matériau conducteur et déformable sous l'effet de la pression, est fixée de manière imperdable à la surface intérieure du collier (2), sur une longueur conséquente du collier (2).

2. Dispositif selon la revendication 1, caractérisé par le fait que la pièce intercalaire (9) est une bande de cuivre tressé.

3. Dispositif selon la revendication 2, caractérisé par le fait que la pièce intercalaire (9) est fixée ponctuellement au collier (2).

4. Dispositif selon l'une des revendications 1 à 3, caractérisé par le fait que le collier (2), matériau isolant (10) et pièce intercalaire (9) compris, forme un arc de cercle.

5. Dispositif selon l'une des revendications 1 à 4, caractérisé par le fait que le matériau isolant (10) est pourvu de lèvres d'étanchéité (11, 12) saillantes sur les deux arêtes longitudinales du collier (2) et sur toute sa longueur.

6. Dispositif selon la revendication 5, caractérisé par le fait que des cavités (15) sont effectuées dans les lèvres d'étanchéité (11, 12) pour appliquer du matériau d'étanchéité (14) supplémentaire.

7. Dispositif selon l'une des revendications 1 à 6, caractérisé par le fait que l'épaisseur de la matière isolante (10) dans la zone de fermeture du collier (2) est plus importante à l'intérieur qu'à l'extérieur.

8. Dispositif selon l'une des revendications 1 à 7, caractérisé par le fait que le collier (2) est constitué de cuivre.

9. Dispositif selon l'une des revendications 1 à 7, caractérisé par le fait que le collier (2) est constitué d'acier inoxydable.

10. Dispositif selon l'une des revendications 1 à 9, caractérisé par le fait que le matériau isolant (10) utilisé est du caoutchouc.
